# EUROPÄISCHE PATENTANMELDUNG

(11) **EP 1 400 982 A2**
(43) Veröffentlichungstag der Anmeldung: **24.03.2004**
(21) Anmeldenummer: 03017797.6
(22) Anmeldetag: 04.08.2003
(51) Int. Cl.: G21K 1/02, G21K 1/10

(54) **Streustrahlenraster oder Kollimator sowie Verfahren zur Herstellung**

(30) Priorität: 06.09.2002 DE 10241424
(71) Anmelder: SIEMENS AKTIENGESELLSCHAFT, 80333 München (DE)
(72) Erfinder: Hoheisel, Martin, Dr., 91056 Erlangen (DE); Schäfer, Martin, 10557 Berlin (DE); Sklebitz, Hartmut, 91056 Erlangen (DE)

(57) **Zusammenfassung**

Die vorliegende Erfindung betrifft ein Verfahren zur Herstellung eines Streustrahlenrasters oder Kollimators für eine Strahlungsart, der aus einem Grundkörper (6) vorgebbarer Geometrie mit Durchgangskanälen (5) für Primärstrahlung der Strahlungsart gebildet ist, die sich zwischen zwei gegenüberliegenden Oberflächen (6b) des Grundkörpers (6) erstrecken. Die Erfindung betrifft auch einen Streustrahlenraster oder Kollimator, der mit dem Verfahren herstellbar ist. Bei dem Verfahren wird der Grundkörper (6) mittels einer Rapid-Prototyping-Technik durch schichtweise Verfestigung eines Aufbaumaterials, das für die Strahlungsart im Wesentlichen durchlässig ist, unter Einwirkung von Strahlung aufgebaut. Innenflächen des Grundkörpers (6) in den Durchgangskanälen (5) werden mit einem die Strahlungsart stark absorbierenden Material (14) bis zu einer Schichtdicke beschichtet, die ausreicht, um auftreffende Sekundärstrahlung der Strahlungsart nahezu vollständig zu absorbieren. Die gegenüberliegenden Oberflächen (6b) des Grundkörpers (6) werden nicht beschichtet oder derart nachbehandelt, dass sie keine oder eine in der Schichtdicke stark reduzierte Beschichtung aus dem die Strahlungsart stark absorbierenden Material (14) tragen. Das vorliegende Verfahren ermöglicht die einfache Herstellung eines Streustrahlenrasters oder Kollimators mit hoher Primärstrahlen-Transparenz.

## Beschreibung

Die vorliegende Erfindung betrifft ein Verfahren zur Herstellung eines Streustrahlenrasters oder Kollimators, insbesondere für Röntgen- oder Gammastrahlung, sowie einen mit dem Verfahren herstellbaren Streustrahlenraster oder Kollimator.

In der Röntgenbildtechnik werden heutzutage hohe Anforderungen an die Bildqualität der Röntgenaufnahmen gestellt. Bei derartigen Aufnahmen, wie sie insbesondere in der medizinischen Röntgendiagnostik durchgeführt werden, wird ein zu untersuchendes Objekt von Röntgenstrahlung einer annähernd punktförmigen Röntgenquelle durchleuchtet und die Schwächungsverteilung der Röntgenstrahlung auf der der Röntgenquelle gegenüberliegenden Seite des Objektes zweidimensional erfasst. Auch eine zeilenweise Erfassung der durch das Objekt geschwächten Röntgenstrahlung kann bspw. in Computertomographie-Anlagen vorgenommen werden. Als Röntgendetektoren kommen neben Röntgenfilmen und Gasdetektoren zunehmend Festkörperdetektoren zum Einsatz, die in der Regel eine matrixförmige Anordnung optoelektronischer Halbleiterbauelemente als lichtelektrische Empfänger aufweisen. Jeder Bildpunkt der Röntgenaufnahme sollte idealerweise die Schwächung der Röntgenstrahlung durch das Objekt auf einer geradlinigen Achse von der punktförmigen Röntgenquelle zu den dem Bildpunkt entsprechenden Ort der Detektorfläche entsprechen. Röntgenstrahlen, die von der punktförmigen Röntgenquelle auf dieser Achse geradlinig auf den Röntgendetektor auftreffen werden als Primärstrahlen bezeichnet.

Die von der Röntgenquelle ausgehende Röntgenstrahlung wird im Objekt jedoch aufgrund unvermeidlicher Wechselwirkungen gestreut, so dass neben den Primärstrahlen auch Streustrahlen, sog. Sekundärstrahlen, auf den Detektor auftreffen. Diese Streustrahlen, die in Abhängigkeit von Eigenschaften des Objektes bei diagnostischen Bildern bis über 90% der gesamten Signal-Aussteuerung eines Röntgendetektors verursachen können, stellen eine zusätzliche Rauschquelle dar und verringern daher die Erkennbarkeit feiner Kontrastunterschiede. Dieser wesentliche Nachteil der Streustrahlung ist dadurch begründet, dass aufgrund der Quanteneigenschaft der Streustrahlung ein signifikanter zusätzlicher Rauschanteil in der Bildaufnahme verursacht wird.

Zur Verringerung der auf die Detektoren auftreffenden Streustrahlungsanteile werden daher zwischen dem Objekt und dem Detektor sog. Streustrahlenraster eingesetzt. Streustrahlenraster bestehen aus regelmäßig angeordneten, die Röntgenstrahlung absorbierenden Strukturen, zwischen denen Durchgangskanäle oder Durchgangsschlitze für den möglichst ungeschwächten Durchgang der Primärstrahlung ausgebildet sind. Diese Durchgangskanäle bzw. Durchgangsschlitze sind bei fokussierten Streustrahlenrastern entsprechend dem Abstand zur punktförmigen Röntgenquelle, d. h. dem Abstand zum Fokus der Röntgenröhre, auf den Fokus hin ausgerichtet. Bei nicht fokussierten Streustrahlenrastern sind die Durchgangskanäle bzw. Durchgangsschlitze über die gesamte Fläche des Streustrahlenrasters senkrecht zu dessen Oberfläche ausgerichtet. Dies führt jedoch zu einem merklichen Verlust an Primärstrahlung an den Rändern der Bildaufnahme, da an diesen Stellen ein größerer Teil der einfallenden Primärstrahlung auf die absorbierenden Bereiche des Streustrahlenrasters trifft.

Zur Erzielung einer hohen Bildqualität werden sehr hohe Anforderungen an die Eigenschaften von Röntgen-Streustrahlenrastern gestellt. Die Streustrahlen sollen einerseits möglichst gut absorbiert werden, während andererseits ein möglichst hoher Anteil an Primärstrahlung ungeschwächt durch den Streustrahlenraster hindurchtreten soll. Eine Verminderung des auf die Detektorfläche auftreffenden Streustrahlenanteils lässt sich durch ein großes Verhältnis der Höhe des Streustrahlenrasters zur Dicke bzw. dem Durchmesser der Durchgangskanäle oder Durchgangsschlitze, d. h. durch eine hohes Schachtverhältnis, erreichen. Wegen der Dicke der zwischen den Durchgangskanälen oder Durchgangsschlitzen liegenden absorbierenden Struktur- oder Wandelemente kann es jedoch zu Bildstörungen durch Absorption eines Teils der Primärstrahlung kommen. Gerade beim Einsatz von Festkörperdetektoren führen Inhomogenitäten der Raster, d. h. Abweichungen der absorbierenden Bereiche von ihrer Ideallage, zu Bildstörungen durch eine Abbildung der Raster im Röntgenbild. Zum Beispiel besteht bei matrixförmig angeordneten Detektorelementen die Gefahr, dass die Projektion der Strukturen von Detektorelementen und Streustrahlenraster miteinander interferieren. Dadurch können störende Moiré-Erscheinungen auftreten.

Ein besonderer Nachteil bei allen bekannten Streustrahlenrastern besteht darin, dass die absorbierenden Strukturelemente nicht beliebig dünn und präzise gefertigt werden können, so dass in jedem Falle ein signifikanter Teil der Primärstrahlung durch diese Strukturelemente weggenommen wird.

Die gleiche Problematik stellt sich in der Nuklearmedizin, insbesondere bei der Anwendung von Gamma-Kameras, wie bspw. Anger-Kameras. Auch bei dieser Aufnahmetechnik muss ähnlich wie in der Röntgendiagnostik darauf geachtet werden, dass möglichst wenig gestreute Gammaquanten den Detektor erreichen. Im Gegensatz zur Röntgendiagnostik befindet sich bei der Nukleardiagnostik die Strahlungsquelle für die Gamma-Quanten im Inneren des Objektes. Dem Patienten wird hierbei ein mit bestimmten, instabilen Nukliden markiertes Stoffwechselpräparat injiziert, das sich dann organspezifisch anreichert. Durch den Nachweis der entsprechend aus dem Körper emittierten Zerfallsquanten wird dann ein Abbild des Organs erhalten. Der zeitliche Verlauf der Aktivität im Organ lässt Rückschlüsse auf dessen Funktion zu. Für den Erhalt eines Bildes des Körperinneren muss vor dem Gamma-Detektor ein Kollimator eingesetzt werden, der die Projektionsrichtung des Bildes festlegt. Ein derartiger Kollimator entspricht von der Funktionsweise und vom Aufbau her dem Streustrahlenraster in der Röntgendiagnostik. Nur die durch die Vorzugsrichtung des Kollimators bestimmten Gamma-Quanten können den Kollimator passieren, schräg dazu einfallende Quanten werden in den Kollimatorwänden absorbiert. Aufgrund der höheren Energie der Gamma-Quanten im Vergleich zu Röntgenquanten müssen Kollimatoren um ein Vielfaches höher ausgeführt werden als Streustrahlenraster für Röntgenstrahlung.

So können gestreute Quanten während der Bildaufnahme ausselektiert werden, indem nur Quanten einer bestimmten Energie im Bild berücksichtigt werden. Allerdings bedingt jedes detektierte Streuquant eine Totzeit der Gamma-Kamera von bspw. einer Mikrosekunde, während der keine weiteren Ereignisse registrierbar sind. Wenn daher kurz nach der Registrierung eines Streuquants ein Primärquant eintrifft, kann es nicht registriert werden und geht für das Bild verloren. Auch wenn ein Streuquant zeitlich - innerhalb gewisser Grenzen - mit einem Primärquant koinzidiert, tritt ein ähnlicher Effekt auf. Da die Auswerteelektronik dann beide Ereignisse nicht mehr trennen kann, wird eine zu hohe Energie ermittelt und das Ereignis wird nicht registriert. Die beiden angeführten Fälle erklären, dass eine hoch wirksame Streustrahlen-Unterdrückung auch in der Nukleardiagnostik zu einer verbesserten Quanteneffizienz führt. Letztlich wird dadurch eine verbesserte Bildqualität bei gleicher Dosierung des applizierten Radio-Nuklids erreicht oder bei gleicher Bildqualität eine geringere Radio-Nuklid-Dosis ermöglicht, so dass die Strahlenexposition des Patienten gesenkt und kürzere Bildaufnahmezeiten erreicht werden können.

Für die Herstellung von Streustrahlenrastern für Röntgenstrahlung und Kollimatoren für Gammastrahlung gibt es derzeit verschiedene Techniken. So sind bspw. lamellenartige Streustrahlenraster bekannt, die aus Blei- und Papier-Streifen gelegt werden. Die Bleistreifen dienen der Absorption der Sekundärstrahlung, während die zwischen den Bleistreifen liegenden Papierstreifen die Durchgangsschlitze für die Primärstrahlung bilden. Die limitierte Präzision bei der Herstellung derartiger Streustrahlenraster sowie die nicht weiter verringerbare Dicke der Bleilamellen führen jedoch auf der einen Seite zu einem unerwünschten Verlust an Primärstrahlung und auf der anderen Seite bei matrixartig angeordneten Detektorelementen eines Festkörperdetektors zu Problemen in der Bildqualität durch Moiré- und/oder Rasterstreifen.

Kollimatoren für Gamma-Kameras werden im Allgemeinen aus mechanisch gefalteten Blei-Lamellen herstellt. Dies ist eine relativ kostengünstige Lösung, hat aber den Nachteil, dass insbesondere bei Einsatz von Festkörperkameras mit matrixförmig angeordneten Detektorelementen, bspw. bei Cadmium-Zink-Tellurid-Detektoren, wegen der dann relativ groben Struktur dieser Kollimatoren störende Aliasing-Effekte auftreten können.

Für die Herstellung von Streustrahlenrastern für Röntgenstrahlung ist aus der US 5,814,235 A ein Verfahren bekannt, bei dem der Streustrahlenraster aus einzelnen dünnen Metallfolien-Schichten aufgebaut wird. Die einzelnen Metallfolien-Schichten bestehen aus einem die Röntgenstrahlung stark absorbierenden Material und werden photolithographisch mit entsprechenden Durchgangsöffnungen strukturiert. Hierfür muss ein Photoresist auf beide Seiten der jeweiligen Folie aufgebracht und über eine Photomaske belichtet werden. Anschließend erfolgt ein Ätzschritt, in dem die Durchgangsöffnungen in das Folienmaterial geätzt werden. Nach dem Entfernen der verbliebenen Photoresistschicht wird eine Adhäsionsschicht auf die geätzten Metallfolien aufgebracht. Die Metallfolien werden anschließend exakt übereinander positioniert und zur Bildung des Streustrahlenrasters miteinander verbunden. Durch eine anschließende Temperaturbehandlung wird die Struktur verfestigt. Auf diese Weise lassen sich zellenartige Streustrahlenraster mit Luftzwischenräumen als Durchgangskanälen herstellen, die für Anwendungen in der Mammographie und der allgemeinen Radiographie geeignet sind. Die photolithographische Ätztechnik ermöglicht hierbei eine präzisere Festlegung der absorbierenden und nicht absorbierenden Bereiche innerhalb des Streustrahlenrasters als dies mit Bleilamellen möglich ist. Durch Verwendung unterschiedlicher Masken von Metallfolie zu Metallfolie - mit jeweils leicht gegeneinander versetzten Durchgangsöffnungen - lassen sich auch fokussierte Streustrahlenraster mit dieser Technik herstellen. Für einen Streustrahlenraster für Röntgenstrahlung werden allerdings eine Vielzahl derartiger Metallfolien-Schichten benötigt, die wiederum eine Vielzahl unterschiedlicher Masken und Herstellungsschritte erfordern. Das Verfahren ist daher sehr zeitaufwendig und kostenintensiv.

Aus der US 6,185,278 B1 ist ein weiteres Verfahren zur Herstellung eines Streustrahlenrasters für Röntgen- und Gammastrahlen bekannt, bei dem ebenfalls einzelne Metallfolien photolithographisch geätzt und übereinander laminiert werden. Bei diesem Verfahren werden jedoch zur Herstellung eines fokussierten Streustrahlenrasters Gruppen von Metallfolien-Schichten mit exakt gleicher Anordnung der Durchgangsöffnungen zusammengefasst, wobei die nur die einzelnen Gruppen gegeneinander versetzte Durchgangsöffnungen aufweisen. Durch diese Technik wird die Anzahl an erforderlichen photolithographischen Masken für die Herstellung des Streustrahlenrasters reduziert.

Ein weiteres Verfahren für die Herstellung eines Streustrahlenrasters für Röntgenstrahlung ist aus der US 5,303,282 bekannt. Bei diesem Verfahren wird ein Substrat aus photosensitivem Material eingesetzt, das unter Einsatz einer Photomaske entsprechend der zu erzeugenden Durchgangskanäle belichtet wird. Aus diesem Substrat werden dann die Kanäle entsprechend der belichteten Bereiche herausgeätzt. Die Oberfläche des Substrates einschließlich der Innenwände der Durchgangskanäle werden mit einem die Röntgenstrahlung absorbierenden Material ausreichender Dicke beschichtet. Zur Erhöhung des Schachtverhältnisses werden ggf. mehrere derartig bearbeiteter Substrate übereinander gestapelt. Ähnliche Herstellungstechniken für die Herstellung zellulärer Streustrahlenraster für Röntgenstrahlung sind in der EP 0 681 736 B1 oder der US 5,970,118 A beschrieben. Das Ätzen von Durchgangskanälen in dickere Substrate führt jedoch zu einem Verlust an Präzision der Kanalgeometrie.

Aus der Veröffentlichung von G. A. Kastis et al., "A Small-Animal Gamma-Ray Imager Using a CdZnTe Pixel Array and a High Resolution Parallel Hole Collimator", ist ein Verfahren zur Herstellung eines zellenartig aufgebauten Kollimators für Gamma-Strahlung bekannt. Der Kollimator wird auch in diesem Fall aus laminierten Schichten aus Metallfolien, hier aus Wolfram, hergestellt, die photochemisch geätzt werden. Auch dieses Herstellungsverfahren ist somit sehr aufwendig und kostenintensiv.

In der nachveröffentlichten DE 101 47 947 ist ein Verfahren zur Herstellung eines Streustrahlenrasters oder Kollimators unter Einsatz der Technik des Rapid-Prototyping beschrieben. Bei diesem Verfahren wird zunächst die Geometrie der durchlässigen und der undurchlässigen Bereiche des Streustrahlenrasters oder Kollimators festgelegt. Anschließend wird mittels einer Rapid-Prototyping-Technik durch schichtweise Verfestigung eines Aufbaumaterials unter Einwirkung von Strahlung ein Grundkörper entsprechend der Geometrie der durchlässigen Bereiche aufgebaut und an den Innenflächen der gebildeten Durchgangskanäle sowie auf der vorder- und rückseitigen Oberfläche mit einem Röntgen- oder Gammastrahlung stark absorbierenden Material beschichtet. Die Schichtdicke wird dabei so gewählt, dass auftreffende Sekundärstrahlung nahezu vollständig in dieser Schicht absorbiert wird.

Durch den Einsatz einer Rapid-Prototyping-Technik beim Aufbau des Grundkörpers können sehr filigrane Strukturen mit sehr hoher Genauigkeit erzeugt werden. Der Grundkörper lässt sich auf diese Weise sehr einfach herstellen, ohne eine Vielzahl von aufwendigen Verfahrensschritten durchführen zu müssen. Die Strukturen, insbesondere die die absorbierenden Bereiche bildenden Zwischenwände bzw. Stege zwischen den Durchgangskanälen, lassen sich bei diesem Verfahren in einfacher Weise mit einer Dicke von etwa 60 - 200 µm realisieren. Die Herstellung von Zwischenwänden mit Dicken unterhalb von 60 µm erfordert jedoch nach wie vor einen erheblichen Aufwand. Auf der anderen Seite führen absorbierende Zwischenwände mit einer Dicke von 60 - 200 µm zu einer ungünstigen Primärstrahlen-Transparenz des Streustrahlenrasters bzw. Kollimators.

Ausgehend von diesem Stand der Technik besteht die Aufgabe der vorliegenden Erfindung darin, ein Verfahren zur Herstellung eines Streustrahlenrasters oder eines Kollimators mit hohem Schachtverhältnis und erhöhter Primärstrahlen-Transparenz anzugeben, das einen geringen Fertigungsaufwand erfordert. Weiterhin soll mit der vorliegenden Erfindung ein Streustrahlenraster oder Kollimator mit hoher Primärstrahlen-Transparenz bereitgestellt werden, der mit dem Verfahren herstellbar ist.

Die Aufgabe wird mit den Verfahren sowie dem Streustrahlenraster bzw. Kollimator gemäß den Patentansprüchen 1, 2 und 11 gelöst. Vorteilhafte Ausgestaltungen der Verfahren sowie des Streustrahlenrasters oder Kollimators sind Gegenstand der Unteransprüche oder lassen sich aus der nachfolgenden Beschreibung und den Ausführungsbeispielen entnehmen.

Bei der einen Alternative des vorliegenden Verfahrens zur Herstellung eines Streustrahlenrasters oder Kollimators für eine Strahlungsart, insbesondere für Röntgenstrahlung oder Gammastrahlung, der aus einem Grundkörper vorgebbarer Geometrie mit Durchgangskanälen für Primärstrahlung der Strahlungsart gebildet ist, die sich zwischen zwei gegenüberliegenden Oberflächen des Grundkörpers erstrecken, wird nach dem Festlegen der Geometrie des Grundkörpers dieser Grundkörper entsprechend der festgelegten Geometrie mittels einer Rapid-Prototyping-Technik durch schichtweise Verfestigung eines Aufbaumaterials unter Einwirkung von Strahlung aufgebaut. Als Aufbaumaterial wird ein Material gewählt, das für die Strahlungsart, für die der Streustrahlenraster oder Kollimator eingesetzt wird, im Wesentlichen durchlässig ist. Nach der Fertigstellung des Grundkörpers werden die in den Durchgangskanälen liegenden Innenflächen des Grundkörpers mit einem die Strahlungsart stark absorbierenden Material bis zu einer Schichtdicke beschichtet, die ausreicht, um auftreffende Sekundärstrahlung der Strahlungsart nahezu vollständig zu absorbieren. Die außerhalb der Durchgangskanäle vorhandenen gegenüberliegenden Oberflächen des Grundkörpers werden hierbei entweder nicht beschichtet oder derart nachbehandelt, dass sie keine oder in der Schichtdicke stark reduzierte Beschichtung aus dem die Strahlungsart stark absorbierenden Material tragen.

Die zweite Alternative des vorliegenden Verfahrens unterscheidet sich von der ersten Alternative lediglich darin, dass die Rapid-Prototyping-Technik nicht für den Aufbau des Grundkörpers, sondern für den Aufbau eines Formkörpers eingesetzt wird, aus dem der Grundkörper durch ein- oder mehrfaches Abformen gebildet wird. Als Material des Grundkörpers wird auch hier ein Material gewählt, das für die Strahlungsart im Wesentlichen durchlässig ist. Die Beschichtung des Grundkörpers erfolgt in gleicher Weise wie bei der ersten Alternative des Verfahrens.

Durch den Einsatz einer Rapid-Prototyping-Technik beim Aufbau des Grundkörpers können wie bei der in der Einleitung angegebenen nachveröffentlichten Druckschrift sehr filigrane Strukturen mit sehr hoher Genauigkeit erzeugt werden. Der Grundkörper lässt sich auf diese Weise sehr einfach herstellen, ohne ein Vielzahl von aufwendigen Verfahrensschritten durchführen zu müssen, so dass der gesamte Herstellungsprozess bis zum Erhalt des fertigen Streustrahlenrasters oder Kollimators gegenüber den anderen bekannten Verfahren des Standes der Technik damit deutlich vereinfacht wird und sich kostengünstiger realisieren lässt.

Durch die Beschichtung lediglich der Innenflächen des Grundkörpers in den Durchgangskanälen mit dem die Strahlungsart stark absorbierenden Material bzw. durch die Entfernung oder starke Reduzierung der Schichtdicke dieser Beschichtung auf den beiden sich gegenüberliegenden Oberflächen des Grundkörpers, d. h. an den Stirnflächen der gebildeten Zwischenwände des Streustrahlenrasters oder Kollimators, wird eine deutlich erhöhte Primärstrahlen-Transparenz erreicht, da das Material des Grundkörpers für die jeweilige Strahlungsart im Wesentlichen durchlässig ist, d. h. die Primärstrahlung nicht oder nur in geringem Maße, vorzugsweise nur weniger als ca. 8%/mm für Mammographieanwendungen und weniger als ca. 2%/mm für Radiographieanwendungen, schwächt. Die Primärstrahlen-Transparenz des Streustrahlenrasters oder Kollimators ist somit auch bei einer Dicke der Zwischenwände oberhalb von 60 µm sehr gering. Diese Zwischenwände bilden zusätzliche Durchgangskanäle für die Strahlung, so dass die effektive Dicke der undurchlässigen Bereiche des Streustrahlenrasters oder Kollimators alleine durch die Dicke der absorbierenden Schicht in Durchgangsrichtung gegeben ist. Auf diese Weise lassen sich bspw. mit einfachen Mitteln der Stereolithographie als bevorzugte Rapid-Prototyping-Technik Streustrahlenraster für die Mammographie in der Größe von 24 x 30 cm² und in der sonstigen Radiographie in der Größe von 43 x 43 cm² mit sehr hoher Primärstrahlen-Transparenz realisieren. Durch das Freilegen bzw. Freihalten der Stirnseiten der Zwischenwände von der stark absorbierenden Schicht ergibt sich eine bisher nicht erreichte Primärtransparenz. Somit können auch dickere Wandstärken der zwischen den Durchgangskanälen ausgebildeten Zwischenwände des Grundkörpers eingesetzt werden. Dies bringt einige zusätzliche Vorteile. So kann eine preiswertere Stereolithographie-Ausrüstung eingesetzt werden, um den Streustrahlenraster oder Kollimator herzustellen. Daraus resultiert eine gesteigerte Fertigungssicherheit, weil eher als bei sehr dünnen Zwischenwänden kleine Variationen der Fokusgröße des Lasers toleriert werden können. Weiterhin hat ein Grundkörper mit dickeren Zwischenwänden eine höhere Festigkeit, so dass sich die späteren Montageschritte einfacher gestalten und sich die Lebensdauer des Streustrahlenrasters bzw. Kollimators erhöht. Bei gleichem Mittenabstand der Durchgangskanäle ergibt sich eine größere Unterdrückung der Streustrahlung als bei der Realisierung mit dünneren Zwischenwänden, da die Kanäle bei dickeren Zwischenwänden enger sind, so dass sich das Schachtverhältnis erhöht. Auch die Zwischenwände selbst wirken bei einem mit dem vorliegenden Verfahren hergestellten Streustrahlenraster oder Kollimator als aktiver Teil des Rasters, wenn die Stirnflächen vollständig frei liegen. In diesem Bereich ist das Schachtverhältnis aufgrund der im Vergleich zum Durchmesser der Durchgangskanäle dünnen Wanddicken sogar noch erhöht, so dass sich eine weitere Steigerung der Rasterselektivität ergibt.

Bei der Rapid Prototyping Technik werden 3D-CAD-Konstruktionen, hier die Geometrie des Grundkörpers, in Volumendaten im CAD-System konvertiert. Das 3D-Volumenmodell für das Rapid Prototyping wird anschließend in einem Rechner in Querschnitte aufgeteilt. Die Querschnitte haben eine Schichtdicke von 100 µm oder darunter. Nach dem Übertragen der Daten auf eine Rapid Prototyping Anlage wird die ursprüngliche Form Schicht für Schicht aufgebaut. Im vorliegenden Verfahren wird dabei eine Rapid Prototyping Technik eingesetzt, bei der der Schichtaufbau durch Einwirkung von Strahlung, insbesondere durch Laserstrahlung, erfolgt. Gerade Laserstrahlung bietet hierbei den Vorteil der Erzeugung sehr filigraner Strukturen.

Der Grundkörper des Streustrahlenrasters oder Kollimators kann entweder direkt durch den Rapid-Prototyping-Prozess oder aus einem mit diesem Prozess erstellten Formkörper durch ein- oder mehrmaliges Abformen hergestellt werden. Geeignete Abformprozesse sind dem Fachmann bekannt und lassen sich einfach und kostengünstig durchführen.

Die mit den vorliegenden Verfahren herstellbaren Streustrahlenraster oder Kollimatoren können beliebige Geometrien der für die entsprechend zu absorbierende Streustrahlung bzw. Sekundärstrahlung durchlässigen Bereiche aufweisen. So lassen sich sämtliche der aus dem Stand der Technik bekannten Geometrien, bspw. zellenartige Strukturen oder Strukturen mit schlitzartigen Durchgangsöffnungen, realisieren. Insbesondere besteht herstellungstechnisch kein Unterschied darin, ob fokussierte oder parallele Streustrahlenraster oder Kollimatoren erzeugt werden. Für die Erzeugung von Streustrahlenrastern oder Kollimatoren mit unterschiedlichem Fokusabstand muss keinerlei Änderung irgendwelcher Masken bei der Herstellung vorgenommen werden.

Die Herstellungstechnik für die Herstellung eines Streustrahlenrasters für Röntgenstrahlung unterscheidet sich nicht von der Herstellungstechnik für die Herstellung eines Kollimators für Gammaquanten. Lediglich die für die Herstellung des Grundkörpers und der absorbierenden Beschichtung eingesetzten Materialien können sich unterscheiden. Weiterhin wird ein Gamma-Kollimator mit einer um ein Vielfaches größeren Höhe erzeugt als ein Streustrahlenraster für Röntgenstrahlung.

In einer bevorzugten Ausführungsform des vorliegenden Verfahrens wird für den Aufbau des Grund- oder Formkörpers die Technik der Stereolithographie eingesetzt. Bei diesem Verfahren bildet ein computergesteuerter UV-Laserstrahl die jeweiligen Konturen der einzelnen Schichten des 3D-Volumenmodells des Grund- bzw. Formkörpers auf einem flüssigen Polymerharz ab. Das Harz härtet durch die Einwirkung des Lasers an den belichteten Stellen bzw. Flächen aus. Dann wird die Bauteilplattform der Anlage abgesenkt und eine neue dünne Schicht Photopolymer-Harz aufgetragen. Durch Wiederholung dieser Schritte wird sukzessive die vollständige Geometrie des Grundkörpers von unten nach oben aufgebaut. Das so entstandene Bauteil kann anschließend nachgehärtet und mechanisch nachbearbeitet werden.

Neben der Stereo-Lithographie als Rapid Prototyping Technik für die Erstellung des Grund- oder Formkörpers lässt sich auch die Technik der Mikro-Stereo-Lithographie einsetzen. Bei dieser Technik wird jede Schicht durch eine einmalige Belichtung mit einem Muster - entsprechend der zu belichtenden Bereiche - belichtet. Hierbei können bspw. Mikrospiegel-Arrays für die Erzeugung der von Schicht zu Schicht abweichenden Muster eingesetzt werden, wie dies aus dem Stand der Technik bekannt ist.

Weiterhin ist es möglich, das Verfahren des selektiven Lasersinterns oder Laserschmelzens für die Erstellung des Grund- oder Formkörpers einzusetzen. Bei dieser Technik handelt es sich um ein Verfahren des lokalen Anschmelzens oder Aufschmelzens von pulverförmigem Ausgangsmaterial durch einen CO₂-Laser. Der Werkstoff wird schichtweise auf eine Bauplattform aufgebaut. Mit den Daten des 3D-Volumenmodells wird der Laserstrahl entlang des Bauteilquerschnittes der jeweiligen Schicht gesteuert. Schicht für Schicht erfolgt die Bearbeitung bzw. Verfestigung einer Schichtdicke von etwa 0,1 bis 0,2 µm. Bei der Absenkung der Bauplattform stellt der Pulverbehälter die Pulvermenge für eine weitere Schicht zur Verfügung, die mit einem entsprechenden Nivellierelement verteilt wird. Die vom Laser zugeführte Energie wird vom Pulver absorbiert und führt zu einer lokalen Verfestigung des Materials.

In einer Ausführungsform des vorliegenden Verfahrens wird ein Formkörper entsprechend der Geometrie der Durchgangskanäle aufgebaut. In diesem Falle ist es erforderlich, den Formkörper auf einer von der Bauplattform entfernbaren Trägerplatte aufzubauen oder diese Trägerplatte als Bestandteil des Formkörpers mittels der Rapid Prototyping Technik zu erstellen. Die in dem Formkörper entstandenen Zwischenräume werden anschließend mit einem für die Strahlungsart im Wesentlichen transparenten Material aufgefüllt, das nach der Aushärtung den Grundkörper bildet. Grund- und Formkörper werden anschließend getrennt und der Grundkörper entsprechend mit der die Strahlungsart stark absorbierenden Beschichtung versehen.

In einer weiteren Ausführungsform wird ein Formkörper entsprechend der Geometrie des Grundkörpers aufgebaut. Dieser Formkörper wird anschließend abgeformt, so dass eine Negativform entsteht. In dieser Negativform werden anschließend entsprechend dem vorangehenden Ausführungsbeispiel die Zwischenräume mit einem für die Strahlungsart im Wesentlichen transparenten Material verfüllt und der dadurch erzeugte Grundkörper entsprechend beschichtet.

Die Beschichtung mit dem die jeweilige Strahlungsart stark absorbierenden Material kann bspw. durch Sputtern, Galvanisieren oder Bedampfen erfolgen. Die Technik des Sputterns hat den besonderen Vorteil, dass sich auch an den Innenflächen des Grundkörpers in den Durchgangskanälen das Beschichtungsmaterial sehr gut ablagert. Die Technik des Galvanisierens kann bspw. in Verbindung mit dem Sputtern eingesetzt werden. Hierbei wird durch Sputtern eine leitfähige Startschicht aufgebracht, die dann durch den Galvanisierungsprozess verstärkt wird. Auch der Einsatz eines elektrisch leitfähigen Polymers als Material des Grundkörpers ist beim vorliegenden Verfahren möglich, wobei dann die Beschichtung direkt durch einen Galvanisierungsprozess aufgebracht werden kann. Es versteht sich von selbst, dass das vorliegende Verfahren unabhängig von dem jeweils eingesetzten Beschichtungsprozess ist. Es können vielmehr alle dem Fachmann bekannten und für die Aufbringung von Beschichtungsmaterial an den Innenflächen des Grundkörpers in den Durchgangsöffnungen geeigneten Techniken eingesetzt werden.

Die Freihaltung bzw. Freilegung der beiden Oberflächen des Grundkörpers von der absorbierenden Beschichtung kann durch unterschiedliche Maßnahmen erreicht werden. So kann einerseits durch eine Maskierung dieser Oberflächen die Abscheidung des stark absorbierenden Materials beim Beschichtungsprozess verhindert werden. Dies kann einerseits durch ein Maskieren der freizuhaltenden Flächen durch bewegliche Masken oder durch Aufbringen eines anschließend entfernbaren Überzuges, z. B. einer thermisch oder chemisch lösbaren Schicht, erfolgen. Bevorzugt wird die Beschichtung jedoch auf diese Oberflächen aufgebracht und durch eine geeignete Nachbehandlung anschließend wieder entfernt. Zum nachträglichen Entfernen des absorbierenden Materials können chemische Prozesse eingesetzt werden. So kann die Absorptionsschicht bspw. mit einer Säure, wie Salzsäure, Essigsäure, andere organische Carbonsäuren, Methansulfonsäure oder Tetrafluorborsäure, wieder entfernt werden. Auch ein mechanisches Entfernen bspw. durch Abschleifen oder Abschmirgeln, oder ein chemomechanischer Prozess kann eingesetzt werden.

Eine auf diese beiden Oberflächen zunächst aufgebrachte Beschichtung sollte hierbei möglichst vollständig wieder entfernt werden. Selbstverständlich wird eine Verbesserung der Primärstrahlen-Transparenz beim vorliegenden Verfahren jedoch auch erreicht, wenn die Dicke dieser Beschichtung deutlich reduziert wird, d. h. auf eine Schichtdicke von 10 % oder weniger der ursprünglichen Schichtdicke. In jedem Fall wird dadurch erreicht, dass beim Einsatz des Streustrahlenrasters oder Kollimators in der bildgebenden Medizintechnik die Primärstrahlung im Bereich der Zwischenwände - wenn auch ggf. leicht geschwächt durch die relativ hohe Transmission des Materials des Grundkörpers - zum Bildaufbau beiträgt.

Der vorliegende Streustrahlenraster oder Kollimator, der mit den vorgestellten Verfahren herstellbar ist, besteht demgemäß aus einem Grundkörper vorgebbarer Geometrie mit Durchgangskanälen für Primärstrahlung der jeweiligen Strahlungsart, die sich zwischen zwei gegenüberliegenden Oberflächen des Grundkörpers erstrecken. Der Grundkörper ist aus einem ersten Material gebildet, das für die Strahlungsart im Wesentlichen durchlässig ist. Innenflächen des Grundkörpers in den Durchgangskanälen sind mit einem die Strahlungsart stark absorbierenden zweiten Material bis zu einer Schichtdicke beschichtet, die ausreicht, um auftreffende Sekundärstrahlung der Strahlungsart nahezu vollständig zu absorbieren. Die gegenüberliegenden Oberflächen des Grundkörpers sind nicht beschichtet oder tragen nur eine in der Schichtdicke stark reduzierte Beschichtung aus dem die Strahlungsart stark absorbierenden zweiten Material.

Das vorliegende Verfahren wird nachfolgend anhand von Ausführungsbeispielen in Verbindung mit den Zeichnungen ohne Beschränkung des allgemeinen Erfindungsgedankens nochmals kurz erläutert. Hierbei zeigen:
- Fig. 1: schematisch die Wirkung eines Streustrahlenrasters bei der Röntgenbildaufnahme eines Objekts;
- Fig. 2: schematisch die Verhältnisse beim Einsatz eines Kollimators während der nuklearmedizinischen Aufnahme eines Objekts;
- Fig. 3: eine Darstellung zur Veranschaulichung der Technik der Stereolithographie;
- Fig. 4: schematisch ein Beispiel für die Erzeugung eines Streustrahlenrasters oder Kollimators aus einem Grundkörper gemäß dem vorliegenden Verfahren;
- Fig. 5: schematisch ein weiteres Beispiel für die Erzeugung des Grundkörpers beim vorliegenden Verfahren; und
- Fig. 6: schematisch ein weiteres Beispiel für die Erzeugung des Grundkörpers beim vorliegenden Verfahren.

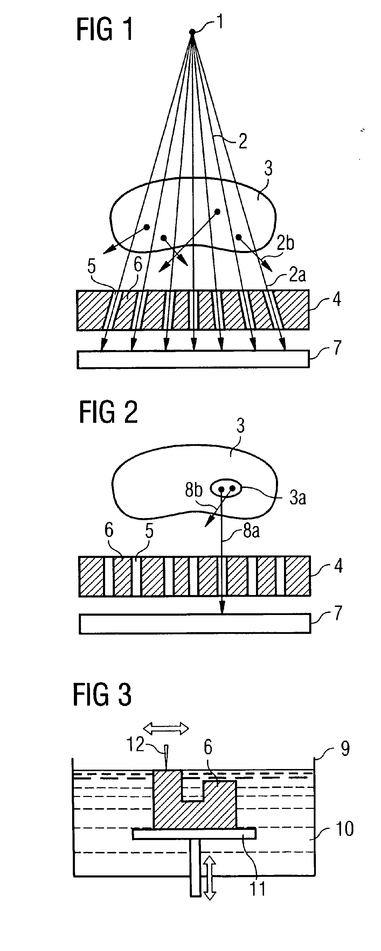

Die typischen Verhältnisse bei einer Röntgenbildaufnahme eines Objektes 3 in der Röntgendiagnostik sind anhand der Figur 1 schematisch dargestellt. Das Objekt 3 befindet sich zwischen dem Röhrenfokus 1 einer Röntgenröhre, der als annähernd punktförmige Röntgenquelle angesehen werden kann, und einer Detektorfläche 7. Die vom Fokus 1 der Röntgenquelle ausgehenden Röntgenstrahlen 2 breiten sich geradlinig in Richtung des Röntgendetektors 7 aus und durchdringen dabei das Objekt 3. Die auf der Detektorfläche 7 auftreffenden Primärstrahlen 2a, die das Objekt 3 vom Röntgenfokus 1 ausgehend geradlinig durchdringen, ergeben auf der Detektorfläche 7 eine ortsaufgelöste Schwächungswertverteilung für das Objektes 3. Ein Teil der vom Röntgenfokus 1 ausgehenden Röntgenstrahlen 2 wird im Objekt 3 gestreut. Die hierbei entstehenden Streustrahlen 2b tragen nicht zur gewünschten Bildinformation bei und verschlechtern beim Auftreffen auf den Detektor 7 das Signal-Rauschverhältnis erheblich. Zur Verbesserung der Bildqualität wird daher ein Streustrahlenraster 4 vor dem Detektor 7 angeordnet. Dieser Streustrahlenraster 4 weist Durchgangskanäle 5 in einem Grundkörper 6 auf, der in diesem Fall aus für Röntgenstrahlung undurchlässigem Material besteht. Die Durchgangskanäle 5 sind in Richtung des Röhrenfokus 1 ausgerichtet, so dass sie die eintreffende Primärstrahlung 2a auf geradlinigem Wege auf die Detektorfläche treffen lassen. Nicht in dieser Richtung einfallende Strahlen, insbesondere die Streustrahlen 2b, werden durch das absorbierenden Material des Grundkörpers 6 blockiert oder erheblich geschwächt. Allerdings lassen sich die absorbierenden Zwischenwände des Grundkörpers 6 aufgrund der bisher bekannten Herstellungstechniken nur mit einer bestimmten Mindestdicke realisieren, so dass dadurch noch ein erheblicher Teil der Primärstrahlung 2a absorbiert wird und nicht zum Bildergebnis beiträgt.

Figur 2 zeigt die Verhältnisse bei der Bildaufnahme in der Nukleardiagnostik. In der Figur ist der zu untersuchende Körper 3 zu erkennen in dem ein Organ 3a angedeutet ist. Durch Injektion eines Gammastrahlung emittierenden Mittels, das sich in dem Organ 3a anreichert, werden aus diesem Bereich Gammaquanten 8a emittiert und treffen auf den Detektor 7, eine Anger-Kamera, auf. Durch den vor dem Detektor 7 angeordneten Kollimator 4, der geradlinig ausgerichtete Durchgangskanäle 5 zwischen Gammastrahlung absorbierenden Bereichen des Grundkörpers 6 aufweist, wird die Projektionsrichtung der jeweiligen Bildaufnahme festgelegt. In andere Richtungen emittierte oder gestreute Gammaquanten 8b, die nicht auf geradlinigem Wege aus dieser Projektionsrichtung kommen, werden vom Kollimator 4 absorbiert. Auch bei dieser Technik wird jedoch aufgrund der nicht beliebig dünnen absorbierenden Bereiche des Grundkörpers 6 noch ein beträchtlicher Teil der Primärstrahlung 8a absorbiert.

Mit der vorliegenden Erfindung wird ein Verfahren bereitgestellt, das eine sehr präzise Fertigung von Streustrahlenrastern oder Kollimatoren mit dünnen Stegen bzw. Zwischenwänden zwischen den Durchgangskanälen 5 ermöglicht. Hierbei wird zur Herstellung des Streustrahlenrasters oder Kollimators eine Rapid Prototyping Technik eingesetzt. Ein Beispiel für eine derartige Technik ist die Stereolithographie, wie sie anhand der Darstellung in der Figur 3 veranschaulicht wird. Bei dieser Technik wird ein UV-Laserstrahl 12 auf die Oberfläche eines flüssigen UV-vernetzbaren Polymers 10 gerichtet, der sich in einem Behältnis 9 befindet. Der UV-Laserstrahl 12 bewegt sich anhand eines dreidimensionalen Volumenmodells des zu erstellenden Grundkörpers 6 über die Oberfläche des flüssigen Polymers 10, um den Grundkörper 6 schichtweise aufzubauen. Nach der Verfestigung einer Schicht wird diese über eine Bauplattform 11 um eine weitere Schichtdicke abgesenkt, so dass der UV-Laser 12 die nächste Schicht entsprechend dem dreidimensionalen Volumenmodell verfestigen kann. Auf diese Weise wird Schicht für Schicht der Grundkörper 6 aus dem vernetzten UV-gehärteten Polymer 10 aufgebaut. Aufgrund der guten Fokussierbarkeit des UV-Laserstrahls 12 lassen sich hierbei sehr filigrane Strukturen mit sehr hoher Genauigkeit realisieren. Der Grundkörper 6 kann direkt auf der Bauplattform 11 oder auf einer zusätzlichen, in der Figur nicht dargestellten Trägerplatte aufgebaut werden, die auf der Bauplattform 11 liegt. Weiterhin lässt sich eine Grundplatte auch direkt mit der Technik der Stereolithographie aufbauen, auf der dann der Grundkörper 6 entsprechend der gewünschten Geometrie gebildet wird.

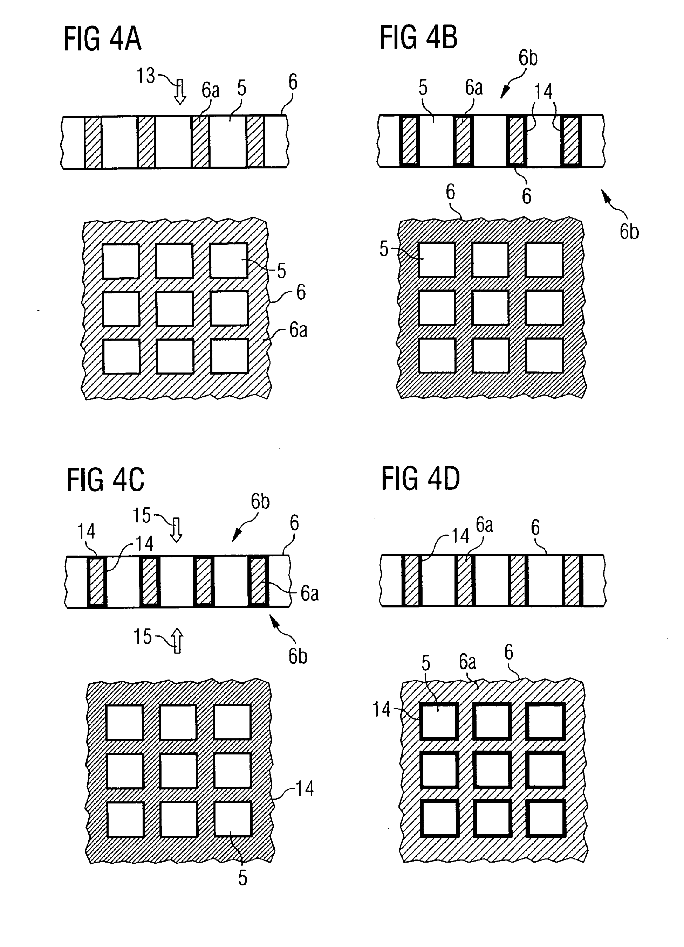

Aus einem auf diese Weise - bspw. gemäß der Technik der Figur 3 - hergestellten Grund- oder Formkörper lässt sich ein Streustrahlenraster oder Kollimator auf unterschiedliche Art und Weise erzeugen. Ein Beispiel hierfür ist in Figur 4 angeführt. Bei dieser Ausführungsform wird ein Grundkörper 6 entsprechend für den zu erstellenden Streustrahlenraster oder Kollimator aus einem für Röntgenstrahlung im Wesentlichen durchlässigen Aufbaumaterial, bspw. einem UV-gehärteten Polymer, erzeugt. Der Grundkörper 6 wird anschließend mit einem absorbierenden Material hoher Ordnungszahl beschichtet (Beschichtungsschritt 13; Figur 4a). In den einzelnen Teilfiguren 4a - 4d ist jeweils im oberen Teil ein Ausschnitt aus dem Grundkörper 6 mit den Durchgangskanälen 5 und den Zwischenwänden 6a bzw. aus dem Streustrahlenraster oder Kollimator im Querschnitt und im unteren Teil in Draufsicht zu erkennen. Aus diesem Beschichtungsschritt 13 resultiert ein Grundkörper 6 mit einer stark absorbierenden Beschichtung 14, die sowohl auf den Innenflächen der Zwischenwände 6a in den Durchgangskanälen 5 als auch an der Ober- und Unterseite 6b des Grundkörpers 6, d. h. an den Stirnflächen der Zwischenwände 6a, aufgebracht ist (Figur 4b).

Die Beschichtung 14 wird schließlich an den Stirnseiten der Zwischenwände 6a durch einen chemischen oder mechanischen Verfahrensschritt, bspw. einen chemischen Ätzschritt 15, entfernt (Figur 4c). Auf diese Weise wird ein Streustrahlenraster oder Kollimator mit Durchgangskanälen 5 erhalten, die zwischen den absorbierenden Beschichtungen 14 der Zwischenwände 6b des Grundkörpers 6 liegen (Figur 4d). Die Zwischenwände 6b bilden mit den sie begrenzenden Beschichtungen 14 ebenfalls Durchgangskanäle für die Primärstrahlung, die ein sehr hohes Schachtverhältnis aufweisen. Bei der Entfernung der Beschichtung 14 an den Stirnseiten sind leichte Einbußen am Absorbermaterial in den Durchgangskanälen 5 bei einem chemischen Abtragungsverfahren unvermeidbar. Für die Funktion des Streustrahlenrasters oder Kollimators ist das jedoch unerheblich, solange die Abtragungen gleichmäßig über die Fläche erfolgen.

Die in den vorliegenden Ausführungsbeispielen dargestellten Zwischenwände 6a des Grundkörpers 6 weisen bei der Herstellung mit der Rapid-Prototyping-Technik in der Regel nicht die dargestellte ebene Plateauform an den Stirnseiten auf. Es bildet sich vielmehr eine mehr oder weniger dachartige Form, deren Spitze abgerundet ist. Eine optimale Primärstrahlen-Transparenz stellt sich ein, wenn die Absorberbeschichtung 14 im Bereich dieser Dachflächen vollständig entfernt ist. Die Absorberbeschichtung 14 auf den Innenflächen der Durchgangskanäle 5 läuft parallel mit den Röntgenstrahlen und schwächt die Primärstrahlung daher nur minimal. Wenn die Stirnseiten bzw. Dachflächen frei liegen, können die Primärstrahlen weitgehend ungeschwächt durch das Polymer des Grundkörpers 6 zum Bilddetektor gelangen. Dadurch lässt sich eine Primärstrahlen-Transparenz von 90% und höher erreichen. Dazu ist es natürlich vorteilhaft, wenn ein möglichst wenig Röntgenstrahlen absorbierendes Polymer für den Grundkörper verwendet wird.

Für die Aufbringung der Beschichtung 14 kann bspw. zunächst eine dünne Kupfer-Schicht durch Sputtern auf die Oberfläche des Grundkörpers 6 aufgebracht werden. Die Dicke dieser Kupfer-Schicht liegt im 10tel µm-Bereich. Auf diese Schicht wird schließlich durch galvanische Abscheidung eine Blei-Zinn-Legierung aufgebracht. Die Dicke dieser Legierung wird so ausgeführt, dass die nötige Absorption der Sekundärstrahlung erreicht wird.

Insbesondere für Mammographie-Anwendungen, bei denen die Energie des verwendeten Röntgenspektrums relativ niedrig ist, reicht eine sehr dünne Absorber-Schicht 14 auf den Strukturen des Grundkörpers 6 aus. Bspw. kann schon mit einer 2 µm dicken Bleischicht bei mittleren Mammographie-Röntgenenergien (20 keV) eine Absorption von etwa 84% bewirkt werden.

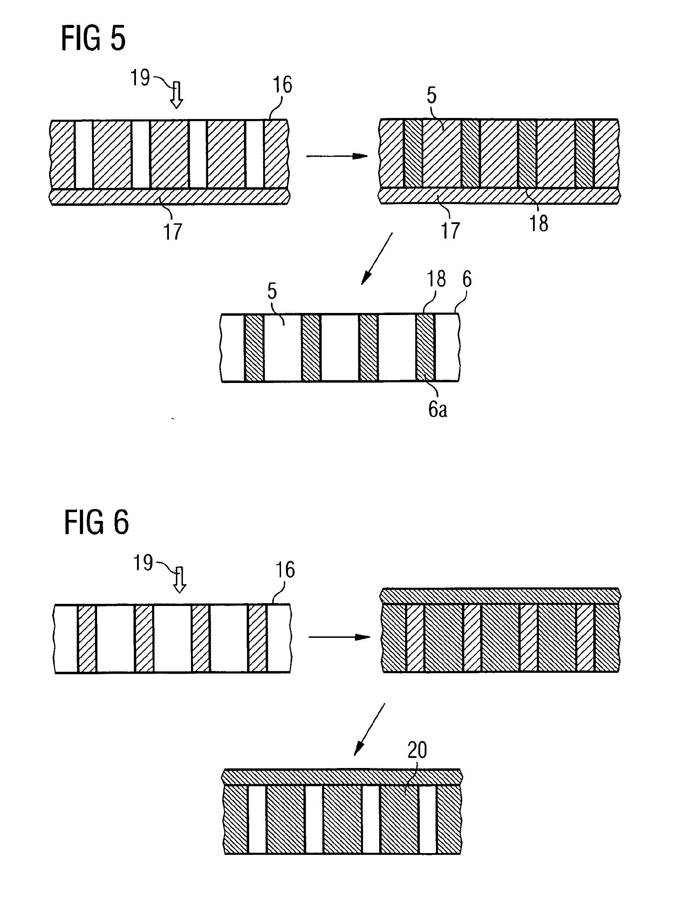

Figur 5 zeigt ein weiteres Beispiel zur Erstellung eines Streustrahlenrasters oder Kollimators, bei dem der Grundkörper 6 aus einem Formkörper 16 abgeformt wird. Der Formkörper 16 wurde in diesem Fall auf eine Grundplatte 17 aufgebracht bzw. mit dieser zusammen gebildet. Der Formkörper 16 wurde hierbei entsprechend der Geometrie der Durchgangskanäle 5 des zu erzeugenden Streustrahlenrasters oder Kollimators hergestellt, so dass er eine Negativform des Grundkörpers 6 darstellt. Da die Durchgangskanäle 5 in der Regel nicht zusammenhängend ausgebildet sind, ist die Grundplatte 17 für die Erstellung eines derartigen Formkörpers erforderlich. In die Zwischenräume dieses Formkörpers 16 wird schließlich ein Material 18 aus einem für Röntgenstrahlung im Wesentlichen transparenten Material in flüssigem Zustand eingefüllt (Verfüllung 19). Dieses Material 18, bspw. ein Polymer, verfestigt sich nach dem Abkühlen und wird vom Formkörper 16 und der Grundplatte 17 getrennt. Auf diese Weise wird ein Grundkörper 6 erhalten, der anschließend in der gleichen Weise wie im Beispiel der Figur 4 weiter verarbeitet wird.

Figur 6 zeigt schließlich ein weiteres Beispiel für die Erstellung eines Streustrahlenrasters aus einem mittels einer Rapid-Prototyping-Technik hergestellten Formkörper 16. Bei diesem Beispiel wird der Formkörper 16 entsprechend der Geometrie des Grundkörpers 6 des Streustrahlenrasters oder Kollimators aufgebaut. Dieser Formkörper 16 wird anschließend in eine Negativform 20, bspw. durch Einfüllen oder Eingießen von Nickel, abgeformt, so dass die Materialbereiche der Negativform 20 den Durchlasskanälen 5 des Streustrahlenrasters oder Kollimators entsprechen. Anschließend kann der Grundkörper 6 aus dieser Negativform 20 gemäß der Vorgehensweise der Figur 5 erstellt werden.

## Patentansprüche

1. Verfahren zur Herstellung eines Streustrahlenrasters oder Kollimators für eine Strahlungsart, der aus einem Grundkörper (6) vorgebbarer Geometrie mit Durchgangskanälen (5) für Primärstrahlung der Strahlungsart gebildet ist, die sich zwischen zwei gegenüberliegenden Oberflächen (6b) des Grundkörpers (6) erstrecken, mit folgenden Schritten:
- Festlegen der Geometrie des Grundkörpers (6);
- Aufbauen des Grundkörpers (6) entsprechend der festgelegten Geometrie mittels einer Rapid Prototyping Technik durch schichtweise Verfestigung eines Aufbaumaterials, das für die Strahlungsart im Wesentlichen durchlässig ist, unter Einwirkung von Strahlung;
- Beschichten von Innenflächen des Grundkörpers (6) in den Durchgangskanälen (5) mit einem die Strahlungsart stark absorbierenden Material (14) bis zu einer Schichtdicke, die ausreicht, um auftreffende Sekundärstrahlung der Strahlungsart nahezu vollständig zu absorbieren, wobei die gegenüberliegenden Oberflächen (6b) des Grundkörpers (6) nicht beschichtet oder derart nachbehandelt werden, dass sie keine oder eine in der Schichtdicke stark reduzierte Beschichtung aus dem die Strahlungsart stark absorbierenden Material (14) tragen.

2. Verfahren zur Herstellung eines Streustrahlenrasters oder Kollimators für eine Strahlungsart, der aus einem Grundkörper (6) vorgebbarer Geometrie mit Durchgangskanälen (5) für Primärstrahlung der Strahlungsart gebildet ist, die sich zwischen zwei gegenüberliegenden Oberflächen (6b) des Grundkörpers (6) erstrecken, mit folgenden Schritten:
- Festlegen der Geometrie des Grundkörpers (6);
- Aufbauen eines Formkörpers (16) entsprechend der festgelegten Geometrie des Grundkörpers (6) oder einer Negativform davon mittels einer Rapid Prototyping Technik durch schichtweise Verfestigung eines Aufbaumaterials unter Einwirkung von Strahlung;
- ein- oder mehrfaches Abformen des Formkörpers (16) zur Bildung des Grundkörpers (6) aus einem Material, das für die Strahlungsart im Wesentlichen durchlässig ist;
- Beschichten des Grundkörpers (6) mit einem die Strahlungsart stark absorbierenden Material (14) bis zu einer Schichtdicke, die ausreicht, um auftreffende Sekundärstrahlung der Strahlungsart nahezu vollständig zu absorbieren, wobei die gegenüberliegenden Oberflächen (6b) des Grundkörpers (6) nicht beschichtet oder derart nachbehandelt werden, dass sie keine oder eine in der Schichtdicke stark reduzierte Beschichtung aus dem die Strahlungsart stark absorbierenden Material (14) tragen.

3. Verfahren nach Anspruch 1 oder 2,
**dadurch gekennzeichnet, dass** die Nachbehandlung der gegenüberliegenden Oberflächen (6b) des Grundkörpers (6) durch einen chemischen Prozess zum Entfernen oder Reduzieren der Beschichtung (14) erfolgt.

4. Verfahren nach Anspruch 1 oder 2,
**dadurch gekennzeichnet , dass** die Nachbehandlung der gegenüberliegenden Oberflächen (6b) des Grundkörpers (6) durch einen mechanischen Prozess zum Entfernen oder Reduzieren der Beschichtung (14) erfolgt.

5. Verfahren nach Anspruch 1 oder 2,
**dadurch gekennzeichnet , dass** die Nachbehandlung der gegenüberliegenden Oberflächen (6b) des Grundkörpers (6) durch einen chemo-mechanischen Prozess zum Entfernen oder Reduzieren der Beschichtung (14) erfolgt.

6. Verfahren nach einem der Ansprüche 1 bis 5,
**dadurch gekennzeichnet, dass** das Verfahren der Stereolithographie als Rapid Prototyping Technik für den Aufbau des Grundkörpers (6) bzw. Formkörpers (16) eingesetzt wird.

7. Verfahren nach einem der Ansprüche 1 bis 6,
**dadurch gekennzeichnet, dass** das Beschichten durch Sputtern oder Bedampfen und/oder galvanische Abscheidung erfolgt.

8. Verfahren nach einem der Ansprüche 1 bis 7,
**dadurch gekennzeichnet, dass** die Geometrie des Grundkörpers (6) derart festgelegt wird, dass ein fokussierter Streustrahlenraster oder Kollimator gebildet wird.

9. Verfahren nach einem der vorangehenden Ansprüche zur Herstellung eines Streustrahlenrasters für Röntgenstrahlung.

10. Verfahren nach einem der vorangehenden Ansprüche zur Herstellung eines Kollimators für Gammastrahlung.

11. Streustrahlenraster oder Kollimator für eine Strahlungsart, der mit dem Verfahren nach einem der vorangehenden Patentansprüche herstellbar ist und aus einem Grundkörper (6) vorgebbarer Geometrie mit Durchgangskanälen (5) für Primärstrahlung der Strahlungsart gebildet ist, die sich zwischen zwei gegenüberliegenden Oberflächen (6b) des Grundkörpers (6) erstrecken, wobei der Grundkörper (6) aus einem erstem Material gebildet ist, das für die Strahlungsart im Wesentlichen durchlässig ist, Innenflächen des Grundkörpers (6) in den Durchgangskanälen (5) mit einem die Strahlungsart stark absorbierenden zweiten Material (14) bis zu einer Schichtdicke beschichtet sind, die ausreicht, um auftreffende Sekundärstrahlung der Strahlungsart nahezu vollständig zu absorbieren, und die gegenüberliegenden Oberflächen (6b) des Grundkörpers (6) nicht beschichtet sind oder nur eine in der Schichtdicke stark reduzierte Beschichtung aus dem die Strahlungsart stark absorbierenden zweiten Material (14) tragen.

12. Streustrahlenraster oder Kollimator nach Anspruch 11,
**dadurch gekennzeichnet , dass** das erste Material ein Polymermaterial ist.

13. Streustrahlenraster oder Kollimator nach Anspruch 11 oder 12,
**dadurch gekennzeichnet, dass** der Grundkörper (6) eine Geometrie aufweist, mit der ein fokussierter Streustrahlenraster oder Kollimator gebildet wird.

14. Streustrahlenraster oder Kollimator nach einem der Ansprüche 11 bis 13,
**dadurch gekennzeichnet, dass** das zweite Material (14) Röntgenstrahlung stark absorbiert und das erste Material für Röntgenstrahlung im Wesentlichen durchlässig ist.

15. Streustrahlenraster oder Kollimator nach einem der Ansprüche 11 bis 13,
**dadurch gekennzeichnet, dass** das zweite Material (14) Gammastrahlung stark absorbiert und das erste Material für Gammastrahlung im Wesentlichen durchlässig ist.
